(19) Europäisches Patentamt / European Patent Office / Office européen des brevets

(11) **EP 2 005 408 B1**

(12) **EUROPEAN PATENT SPECIFICATION**

(45) Date of publication and mention
of the grant of the patent:
**08.07.2015 Bulletin 2015/28**

(21) Application number: **07733565.1**

(22) Date of filing: **21.03.2007**

(51) Int Cl.:
*G09G 3/20* *(2006.01)*      *G09G 3/32* *(2006.01)*

(86) International application number:
**PCT/GB2007/050140**

(87) International publication number:
**WO 2007/107794 (27.09.2007 Gazette 2007/39)**

(54) **IMAGE PROCESSING SYSTEMS**

BILDVERARBEITUNGSSYSTEME

SYSTEMES DE TRAITEMENT D'IMAGES

(84) Designated Contracting States:
**AT BE BG CH CY CZ DE DK EE ES FI FR GR HU
IE IS IT LI LT LU LV MC MT NL PL PT RO SE SI
SK TR**

(30) Priority: **23.03.2006 GB 0605756**

(43) Date of publication of application:
**24.12.2008 Bulletin 2008/52**

(73) Proprietor: **Cambridge Display Technology
Limited
Cardinal Way
Godmanchester
Cambridgeshire PE29 2XG (GB)**

(72) Inventors:
• **SMITH, Euan Christopher
Cambridge Cambridgeshire CB23 0TX (GB)**

• **MASH, Peter
Cambridgeshire CB2 3LR (GB)**
• **CABLE, Adrian
Hertfordshire SG7 6PF (GB)**

(74) Representative: **Grünecker Patent- und
Rechtsanwälte
PartG mbB
Leopoldstraße 4
80802 München (DE)**

(56) References cited:
**WO-A-2004/001707      WO-A-2004/088568
WO-A-2006/035246      WO-A-2006/035248
WO-A2-2006/067520      GB-A- 2 421 604**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention generally relates to image processing systems. More particularly it relates to systems and methods for displaying images using multi-line addressing (MLA) or total matrix addressing (TMA) techniques with reduced noise. Embodiments of the invention are particularly useful for driving OLED (organic light emitting diode) displays.

We have previously described how techniques for multi-line addressing (MLA) and total matrix addressing (TMA) in particular using non-negative matrix factorisation (NMF) may be advantageously employed in OLED display driving (see in particular our International application PCT/GB2005/050219). We now describe further improvements to these techniques in which, broadly speaking, multiple frame sets are employed for noise reduction and improved image quality. Background prior art can be found in US2003/0214493; US2004/0257359; EP 0953956A; and GB 2327798A.

International patent application publication WO 2004088568, inventor Giraldo Andrea et al., applicant Konikl Philips Electronics NV et al, published 2004-10-14, describes that a display device comprises a display and generating means. The display has a plurality of light emitting elements, and data lines for providing pulse width modulation (PWM) signals to the light emitting elements. The generating means are coupled to the data lines for generating, during time intervals of a frame period, at least a first non-zero emission level of a light emitting element during a first one of the time intervals and a second non-zero emission level during a second one of the time intervals.

International patent application publication WO 2004001707, inventor Trags Alexander JR, applicant Konikl Philips Electronics NV et al, published 2003-12-31, describes a display device comprising a liquid crystal between a first substrate provided with row or selection electrodes and a second substrate provided with column or data electrodes, in which overlapping parts of row and column electrodes define pixels, drive means for driving the column electrodes in conformity with an image to be displayed, and drive means for driving the row electrodes which, in the operating condition, within a frame period sequentially supply groups ofp row electrodes with mutually orthogonal signals obtained from at least two different orthogonal functions.

## Multi Line Addressing and Total Matrix Addressing

To aid in understanding embodiments of the invention we first review multi-line addressing (MLA) techniques, a preferred special case of which comprises total matrix addressing (TMA) techniques. These are preferably employed with passive matrix OLED displays, that is displays which do not include a memory element for each pixel (or colour sub-pixel) and must therefore be continually refreshed. In this specification OLED displays include displays fabricated using polymers, so-called small molecules (for example US4,539,507), dendrimers, and organometallic materials; the displays may be either monochrome or colour.

In a conventional passive matrix display the display is driven line-by-line and hence a high drive is required for each line because it is only illuminated for a fraction of the frame period. MLA techniques drive more than one line at once and in TMA techniques all the lines are driven simultaneously and an image is built up from a plurality of successively displayed subframes which, when integrated in the observer's eye, give the impression of the desired image. The required luminescence profile of each row (line) is built up over a plurality of line scan periods rather than as an impulse in a single line scan period. Thus the pixel drive during each line scan period can be reduced, hence extending the lifetime of the display and/or reducing the power consumption due to a reduction of drive voltage and reduced capacitive losses. This is because OLED lifetime reduces with the pixel drive (luminance) to a power typically between 1 and 2 but the length of time for which a pixel must be driven to provide the same apparent brightness to an observer increases only substantially linearly with decreasing pixel drive. The degree of benefit depends in part upon the correlation between the groups of lines driven together.

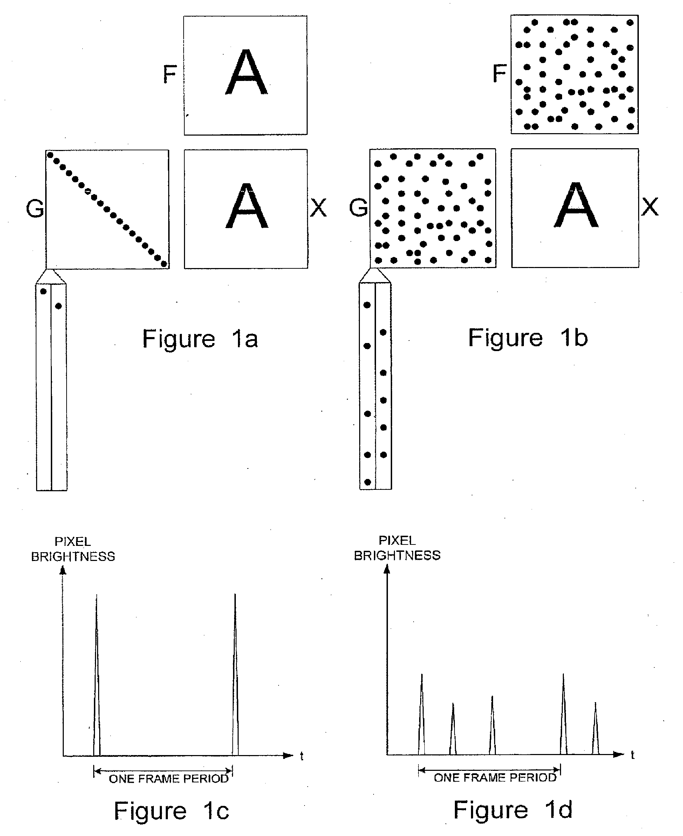

Figure 1a shows row **G,** column **F** and image **X** matrices for a conventional drive scheme in which one row is driven at a time. Figure 1b shows row, column and image matrices for a multiline addressing scheme. Figures 1c and 1d illustrate, for a typical pixel of the displayed image, the brightness of the pixel, or equivalently the drive to the pixel, over a frame period, showing the reduction in peak pixel drive which is achieved through multiline addressing.

The problem is to determine sets of row and column drive signals for the subframes so that a set of subframes approximates the desired image. We have previously described solutions to this problem in International Patent Applications Nos. GB2005/050167-9. A preferred technique employs non-negative matrix factorisation of a matrix describing the desired image. The factor matrices, the elements of which are positive since the OLED display elements provide a positive (or zero) light emission, essentially define the row and column drive signals for the subframes. We describe later one preferred NMF technique in the context of which embodiments of the invention may operate, although techniques may also be employed.

Referring to Figure 1a we first describe an overall OLED display system 100 which incorporates a display drive data processor 150 which may implement embodiments of the invention in either hardware (preferred), software, or a combination of the two.

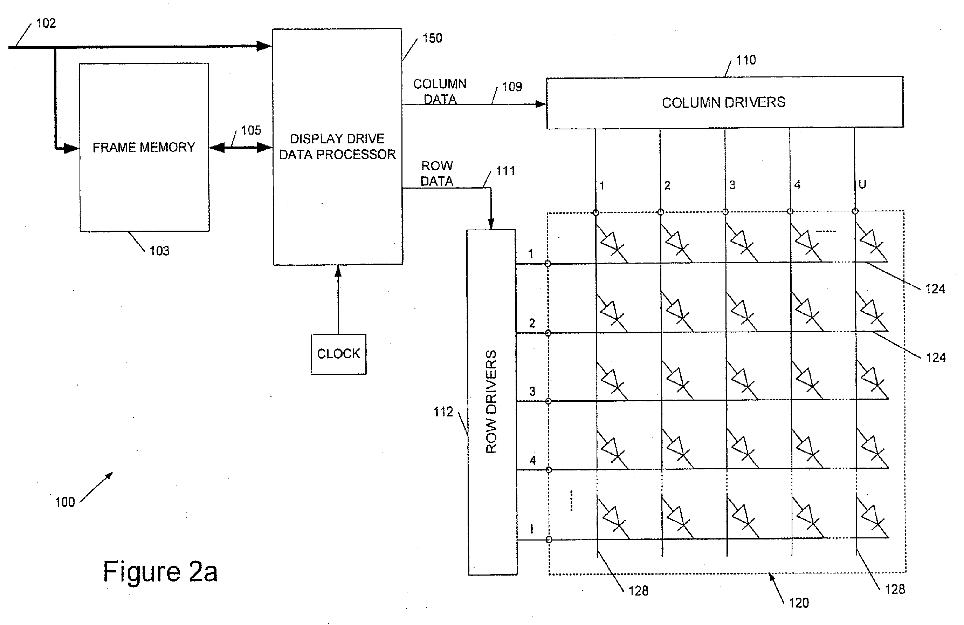

In figure 2a a passive matrix OLED display 120 has row electrodes 124 driven by row driver circuits 112 and column electrodes 128 driven by column drives 110.

Details of these row and column drivers are shown in figure 1b. Column drivers 110 have a column data input 109 for setting the current drive to one or more of the column electrodes; similarly row drivers 112 have a row data input 111 for setting the current drive ratio to two or more of the rows. Preferably inputs 109 and 111 are digital inputs for ease of interfacing; preferably column data input 109 sets the current drives for all the *U* columns of display 120.

Data for display is provided on a data and control bus 102, which may be either serial or parallel. Bus 102 provides an input to a frame store memory 103 which stores luminance data for each pixel of the display or, in a colour display, luminance information for each sub-pixel (which may be encoded as separate RGB colour signals or as luminance and chrominance signals or in some other way). The data stored in frame memory 103 determines a desired apparent brightness for each pixel (or sub-pixel) for the display, and this information may be read out by means of a second, read bus 105 by display drive data processor 150. Display drive data processor 150 preferably performs input data pre-processing, NMF, and post-processing.

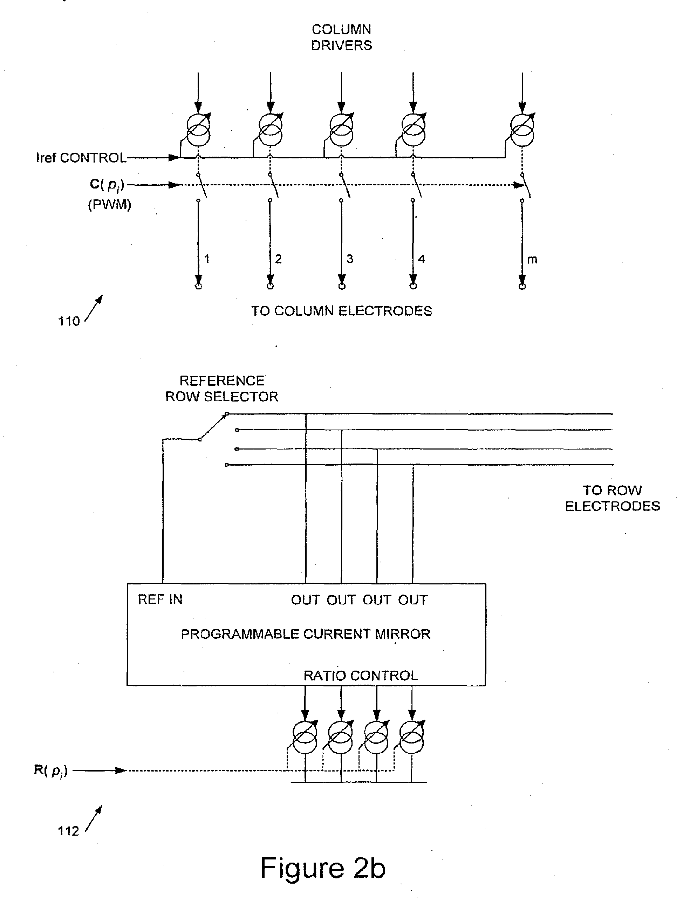

Figure 2b illustrates row and column drivers suitable for driving a display with a factorised image matrix. The column drivers 110 comprise a set of adjustable substantially constant current sources which are ganged together and provided with a variable reference current $I_{ref}$ for setting the current into each of the column electrodes. This reference current is pulse width modulated (PWM) by a different value for each column derived from a row of an NMF factor matrix. OLEDs have a quadratic current-voltage dependence, which constrains independent control of the row and column drive variables. PWM is useful as it allows the column and row drive variables to be decoupled from one another.

With PWM drive, rather than always have the start of the PWM cycle an "on" portion of the cycle, the peak current can be reduced by randomly dithering the start of the PWM cycle. A similar benefit can be achieved with less complexity by starting the "on" portion timing for half the PWM cycles at the end of the available period in cases where the off-time is greater than 50%. This is potentially able to reduce the peak row drive current by 50%.

The row driver 112 comprises a programmable current mirror, preferably with one output for each row of the display (or for each row of a block of simultaneously driven rows). The row drive signals are derived from a column of an NMF factor matrix and row driver 112 distributes the total column current for each row so that the currents for the rows are in a ratio set by the ratio control input (**R**). Further details of suitable drivers can be found in the Applicant's PCT application GB2005/010168.

Since (in this arrangement) the row signals are effectively normalised by the row driver, in post-processing the column drive reference current and/or the sub-frame time are adjusted to compensate. Optionally but preferably the post-processing also adjusts duration of each sub-frame, for example proportional to the brightness of brightest pixel in a sub-frame, so that high luminance is achieved by increased duration as well as increased drive (thus extending pixel lifetime). More details of this technique can be found in our UK patent application number 0605755.8 filed on 23 March 2006.

We now describe one preferred NMF calculation:

An input image is given by matrix **V** with elements $V_{xy}$, **R** denotes a current row matrix, **C** a current column matrix, **Q** a remaining error between **V** and **R.C,** *p* the number of sub-frames, *average* an average value, and *gamma* an optional gamma correction function.

The variables are initialised as follows:

$$av = \mathrm{average}(\mathrm{gamma}(\mathbf{V_{xy}}))$$

$$initialRC = \sqrt{(av / p)}$$

$$\mathbf{Q_{xy}} = \mathrm{gamma}(\mathbf{V_{xy}}) - av$$

An embodiment of the NMF system then performs the following calculation for $p = 1$ to the total number of subframes:

$$start$$
$$\mathbf{Q_{xy}} = \mathbf{Q_{xy}} + \mathbf{R_{py}C_{xp}} \quad for\ each\ x\ and\ y$$

$$\mathbf{R_{py}} = \frac{bias + \sum\limits_{x} \mathbf{Q_{xy}C_{xp}}}{bias + \sum\limits_{x} \mathbf{C_{xp}C_{xp}}} \quad for\ each\ y$$

$$\mathbf{C_{xp}} = \frac{bias + \sum\limits_{y} \mathbf{Q_{xy}R_{py}}}{bias + \sum\limits_{y} \mathbf{R_{py}R_{py}}} \quad for\ each\ x$$

$$\mathbf{Q_{xy}} = \mathbf{Q_{xy}} - \mathbf{R_{py}C_{xp}} \quad for\ each\ x\ and\ y$$

$$loop\ to\ start \quad (p \leftarrow p + 1)$$

The variable *bias* prevents division by zero, and the values of R and C pull towards this value. A value for *bias* may be determined by *initialRC* x *weight* x *no.of.columns* where the number of columns is x and the weight is, for example, between 64 and 128.

Broadly speaking the above calculation can be characterised as a least squares fit. The matrix **Q** initially begins as a form of target matrix since the row **R** and column **C** matrices are generally initialised so that all their elements are the same and equal to the average value *initialRC*. However from then on matrix **Q** represents a residual difference between the image and the result of combining the subframes - so ideally **Q** = 0. Thus, broadly speaking, the procedure begins by adding the contribution for subframe $p$ and then for each row finds the best column values, and afterwards for each column finds the best row values. The updated row and column values are then subtracted back from **Q** and the procedure continues with the next subframe. Typically a number of iterations, for example between 1 and 100, is performed so that the **R** and **C** for a set of subframes converge towards a best fit. The number of subframes $p$ employed is an empirical choice but may, for example, be between 1 and 1000.

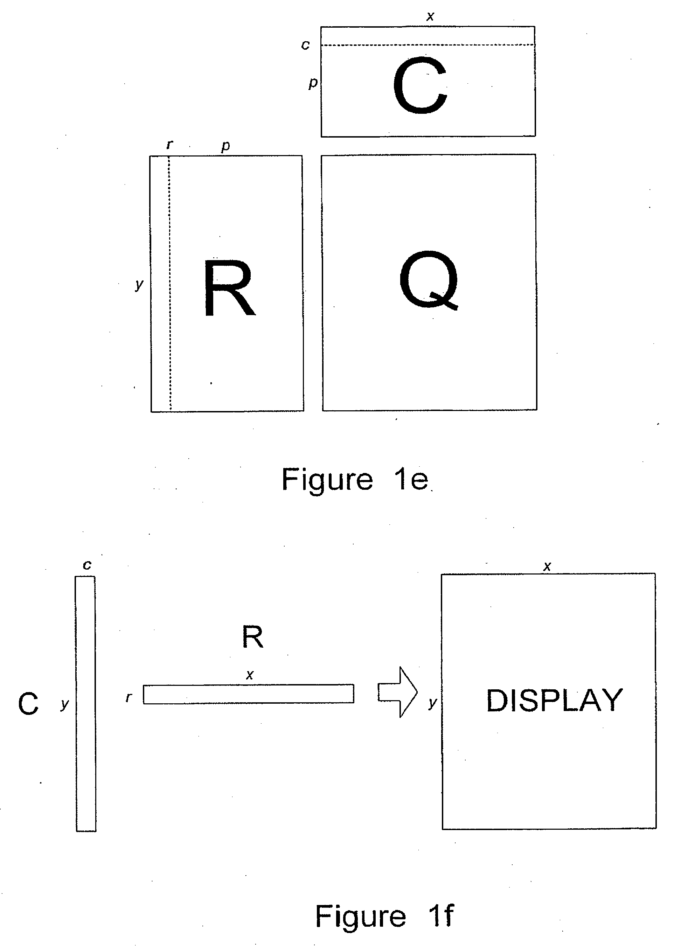

The factorisation of **Q** into row and column factor matrices **R** and **C** is schematically illustrated in Figure 1e. Figure 1f is schematically illustrates driving a display with one temporal sub-frame using sub-frame data from the row and column factor matrices **R** and **C.**

In this description the skilled person will understand that references to rows and columns are interchangeable and that, for example, in the above equation system the order of processing to determine updated $R_{py}$ and $C_{xp}$ values may be exchanged.

In the above set of equations preferably all integer arithmetic is employed, and preferably **R** and **C** values comprise 8 bit values and **Q** comprises signed 16 bit values. Then, although the determination of **R** and **C** values may involve rounding off there is no round-off error in **Q** since **Q** is updated with the rounded off values (and the product of **R** and **C** values cannot be greater than maximum value which can be accommodated within **Q**). The above procedure may straightforwardly be applied to pixels of a colour display (details later). Optionally a weight **W** matrix may be employed to weight errors in low luminance values higher, because the eye is disproportionately sensitive to imperfect blacks. A similar weighting may be applied to increase the weight of errors in a green colour channel, because the eye is disproportionately sensitive to green errors.

A typical set of parameters for a practical implementation of a display driver system based upon the above NMF procedure might have a desired frame rate of 25 frames per second, each frame comprising 20 iterations of the procedure, with, for example, 160 subframes. The NMF procedure may be implemented in software, for example on a DSP (digital signal processor) but we have also described (UK patent application no. 0605748.3 filed on 23 March 2006) a hardware architecture that enables a cheaper, lower-power implementation of the procedure.

## Summary of the invention

According to a first aspect of the present invention, there is provided a method of driving a passive matrix electroluminescent display using multi-line addressing to display an image, as defined in appended independent claim 1.

According to a second aspect of the present invention, there is provided a driver for driving a passive matrix electroluminescent display to display an image, as defined in appended independent claim 8.

Preferred embodiments are defined in the appended dependent claims.

These and other aspects of the invention will now be further described, by way of example only, with reference to the accompanying figures in which:

Figures 1a to 1f show row, column and image matrices for a conventional drive scheme and for a multi-line addressing drive scheme respectively, and corresponding brightness curves for a typical pixel over a frame period, factorisation of a target matrix into row and column factor matrices, and driving a display with one temporal sub-frame using sub-frame data from the row and column factor matrices;

Figures 2a and 2b show, respectively, an OLED display and driver including an NMF hardware accelerator according to an embodiment of the invention, and details of example row and column drivers for the display; and

Figure 3 shows a further example of an OLED display and driver system for implementing an embodiment of the invention.

Broadly speaking we will describe systems and methods for displaying an image on a TMA driven display in which image error is reduced by calculating two or more image frames, generally from different starting points, optionally with accumulated error in the second (and optionally later) frames, and displaying these rapidly in sequence.

According to an embodiment there is therefore provided a method of driving an electroluminescent display to display an image, the method comprising: inputting image data for said image; determining, using said image data, a first set of image subframe data for a first plurality of image subframes each representing a common spatial portion of said image, wherein said first plurality of image subframes combine to approximate said common spatial portion of said image; driving said display using said first set of image subframe data; determining, using said image data, a second set of image subframe data for a second plurality of image subframes each representing said common spatial portion of said image, wherein said second plurality of image subframes combine to approximate said common spatial portion of said image; and driving said display using said second set of image subframe data.

In embodiments of the method, calculating two sets of subframes for a single image enables an overall reduction in noise. The data for the two sets of subframes may be displayed in a variety of different orders, for example the first set of subframes followed by the second set of subframes, or interleaved subframes from the first and second sets, or in some other order. In a TMA embodiment a subframe may represent the complete image or at least a complete colour plane of the image.

In preferred embodiments of the method the image data defines a target image matrix which is factorised, preferably using NMF, into first and second factor matrices. This procedure is performed twice so that two pairs of factor matrices are determined for a single image, more precisely for a single processed spatial region of the image. In the preferred embodiment of the NMF procedure described above the first and second (row and column) factor matrices are initialised to an average pixel luminance value (here luminance may mean, in the context of a colour display, the luminance of a pixel of a particular colour). In such embodiments to generate two different sets of subframes the factor matrices are preferably initialised to different values prior to the factorisation. In some particularly preferred embodiments following one factorisation a residual error may be employed (added to the target image) when determining the second set of subframes. In this way the image generated by the second set of subframes at least partially compensates for the representation of the image by the approximation comprising the first set of subframes. Thus the number of subframes in each set may be less than that needed for a target signal-to-noise (SNR) ratio provided that, taken together, the two images defined by the first and second sets of subframes combine (in the observer's eye) to generate a displayed image with at least the target SNR.

The method may be extended to calculate and display a third set of image subframes, and so forth.

An embodiment provides a driver for driving an electroluminescent display to display an image, the driver comprising: an input to receive input data for said image; means for determining, using said image data, a first set of image subframe data for a first plurality of image subframes each representing a common spatial portion of said image, wherein said first plurality of image subframes combine to approximate said common spatial portion of said image; means for determining, using said image data, a second set of image subframe data for a second plurality of image subframes each representing said common spatial portion of said image wherein said second plurality of image subframes combine to approximate said common spatial portion of said image; and an output for driving said display using said first and second sets of image subframe data.

The method may be employed with video data, either separately to each frame of the video (or interlaced field), or to a sequence of video frames each successive frame compensating the noise in the previous frame. This may be useful where the image does not change substantially from frame to frame, or where the image changes in a known way, for example by the addition of an object or a general darkening. In embodiments the factorisation may be "reset" at intervals, for example by calculating a factorisation which does not depend on a previously factorised frame of the video.

Optionally the factorisation may also be "reset" in response to changes in the video, for example from a real time moving image to text. In embodiments the video frame rate may also be adjusted, for example to use a half frame rate instead of two sets of subframes per image frame (or more generally to reduce the frame rate proportionate to the the number of sets of sub-frames employed). This may be responsive to the displayed data, for example, to reduce the frame rate when text is displayed.

Thus an embodiment provides a method of driving an electroluminescent display to display successive image frames of video data, the method comprising: inputting image data for a first said frame; determining, using said image data, a first set of image subframe data for a first plurality of image subframes each representing a common spatial portion of said first image frame, wherein said first plurality of image subframe combine to approximate said common spatial portion of said first image frame; driving said display using said first set of image subframe data; inputting image data for a next said frame; determining, using said image data, a second set of image subframe data for a second plurality of image subframes each representing said common spatial portion of said next image frame, wherein said second plurality of image subframes combine to approximate said common spatial portion of said next image frame, and wherein said determining takes into account an error in said approximating of said first image frame.

An embodiment provides a driver for driving an electroluminescent display to display successive image frames of video data, the driver comprising: an input to receive said video data; means for determining, using said image data, a first set of image subframe data for a first plurality of image subframes each representing a common spatial portion of said first image frame, wherein said first plurality of image subframes combine to approximate said common spatial portion of said first image frame; means for determining, using said image data, a second set of image subframe data for a second plurality of image subframes each representing said common spatial portion of said next image frame, wherein said second plurality of image subframes combine to approximate said common spatial portion of said next image frame, and wherein said determining takes into account an error in said approximating of said first image frame.; and an output for driving said display using said first and second sets of image subframe data.

A still further embodiment provides a method of improving a displayed image quality in an electroluminescent display in which an image is produced by generating a set of subframes comprising a plurality of temporal subframes displayed in rapid succession so that they integrate in an observer's eye to create the image, the method comprising: generating a plurality of different said sets of temporal subframes each set configured to, in combination, approximate said image; and displaying said plurality of sets of subframes so that they integrate in said observer's eye to create an improved approximation of said image.

An embodiment provides a driver for an electro-optic display, the display having a plurality of pixels each addressable by a row electrode and a column electrode, the driver comprising: an input for receiving image data for display, said image data defining an image matrix; a system to factorise said image matrix into a product of at least first and second factor matrices, said first factor matrix defining row drive signals for said display, said second factor matrix defining column drive signals for said display; an output to output said row and column drive signals defined by said first and second factor matrices; and a controller to control said factorising system to factorise a said image matrix at least twice for a single image for display to generate two sets of said row and column drive signals for output.

An embodiment provides a driver for an electro-optic display, more particularly an emissive display such as an OLED display, incorporating means for implementing a method as described above. Examples of electroluminescent displays which may be employed with such a driver and with the above described methods include a passive matrix OLED display, an inorganic LED display, a plasma display, a vacuum fluorescent display, and thick and thin film electroluminescent displays as iFire® displays. The electro-optic display may be either colour or monochrome.

An embodiment provides processor control code to implement the above-described methods, for example on a general purpose computer system or on a digital signal processor (DSP). The code may be provided on a carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code. The above described methods may also be implemented, for example, on an FPGA (field programmable gate array) or in an ASIC (application specific integrated circuit). Thus the code may also comprise code for setting up or controlling an ASIC or FPGA, or code for a hardware description language such as Verilog (Trade Mark), VHDL (Very high speed integrated circuit Hardware Description Language), or RTL code or SystemC. Typically dedicated hardware is described using code such as RTL (register transfer level code) or, at a higher level, using a language such as C. As the skilled person will appreciate such code and/or data may be distributed between a plurality of coupled components in communication with one another.

Referring back to the above described NMF method, in one embodiment the TMA frame averaging procedure performs an NMF calculation as previously described on the same image twice, starting from different, for example random, starting points. As previously mentioned generally the image is initially represented by the target matrix **Q,** which at the end of the procedure represents the difference between the target and the image generated by the calculated set of subframes. The starting point of the procedure is defined by the initial contents of the row and column matrices **R** and **C.** Once the TMA calculation has been performed twice both subframe sets are displayed in sequence at a sufficiently high refresh rate that, to a user (observer) the two images average together giving the impression of the single, target image. Where the noise in the image arising from the NMF calculation is substantially random, this noise is reduced.

In a variant of this procedure a first TMA (NMF) calculation is performed, and then a second calculation is performed adding the error in the first image reproduction to the target image for the second calculation. This may be done in a number of mathematically equivalent ways. One method, for example, is to add the residual **Q** matrix from the previous calculation to the new (target) **Q** matrix for the second TMA (NMF) calculation. The resultant sets of subframes are then displayed as before.

Where a sequence of frames is factorised, for example for video, the residual **Q** matrix from the previous calculation may be multiplied by a decay factor of less than unity, for example 0.7, so that the effect of previous frames gradually diminishes.

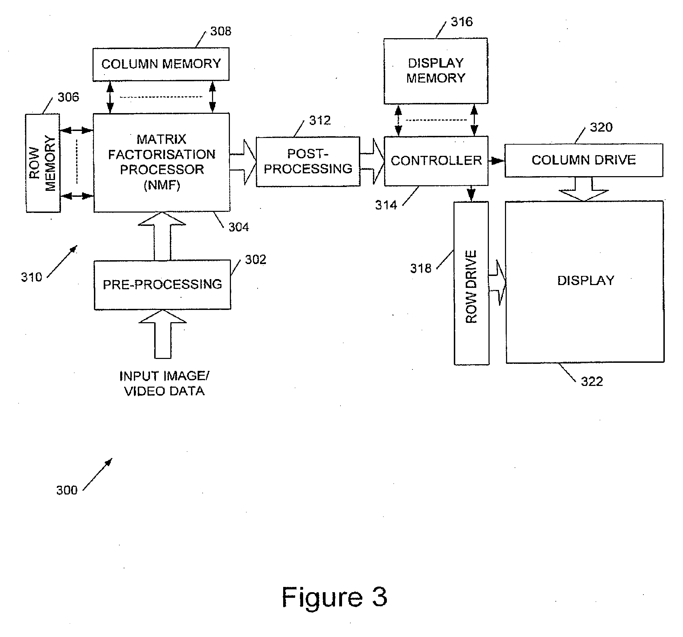

The skilled person will understand that the above described methods may be extended to use more than two frames. Further, because two or more frames are displayed for each image each frame may have a reduced number of subframes and yet still achieve a desired target signal-to-noise ratio. For example the method may be applied to a full frame rate calculation as described above typically between 25 fps and 100 fps, in the method half the usual number of subframes being employed with the residual error being passed to the second frame for correction in the second set of subframes. This uses substantially the same number of calculations as displaying a single set of subframes for each image but has the potential to provide improved image quality. Figure 3 shows a block diagram of a further example of a system 300 configured to implement an embodiment of the invention. The system of Figure 3 includes a non-negative matrix factorisation system 310 to perform NMF as described above, either for example, on a digital signal processor (DSP) or, in some preferred embodiments, in hardware (as described for example in the Applicant's co-pending UK patent application no. 0605748.3 filed on the same day as this application). The NMF system comprises an NMF processor 304 which is loaded with the target image data and which is coupled to row 306 and column 308 memory blocks for storing factor matrices **R** and **C.**

The system 300 receives input image data, which may be monochrome or colour video data, and performs optional pre-processing 302 for example for gamma correction. The NMF output from system 310 is provided to an optional but preferable post-processor 312 for modifying the display periods of individual sub-frames in order to optimise the benefits of TMA driving (preferably as described in the Applicant's co-pending UK patent application no. 0605755.8 filed on the same day as this application). The data is then passed to a controller 314 coupled to display memory 316 and to row 318 and column 320 drivers for driving OLED display 322. For example, for, say a colour QVGA display the display memory may have 320x240x3 memory locations.

The skilled person will understand that since in embodiments of the invention two (or more) sets of subframes are employed, each set derived from a factorisation of the image matrix, for a given total number of subframes the memory requirements of the NMF system are divided by two (or more).

Embodiments of the above described techniques provide image data processing which facilitates improved quality passive matrix TV-sized screens (say 8" and above) with only slightly higher power consumption, and vastly lower cost, than active matrix equivalents.

No doubt many other effective alternatives will occur to the skilled person. It will be understood that the invention is not limited to the described embodiments and encompasses modifications apparent to those skilled in the art lying within the scope of the claims appended hereto.

**Claims**

1. A method of driving a passive matrix electroluminescent display (120, 322) using multi-line addressing to display an image, the method comprising:

inputting image data for said image;
determining, using said image data, a first set of image subframe data for a first plurality of image subframes each representing a common spatial portion of said image, wherein said first plurality of image subframes combine to approximate said common spatial portion of said image;
driving said display (120, 322) using said first set of image subframe data;
determining, using said image data, a second set of image subframe data for a second plurality of image subframes each representing said common spatial portion of said image, wherein said second plurality of image subframes combine to approximate said common spatial portion of said image; and
driving said display (120, 322) using said second set of image subframe data,
wherein said image data defines a target image matrix, and wherein each of said determining of said first set of image subframe data and said determining of said second set of image subframe data comprises factorising said target matrix to determine first and second factor matrices (RC) defining data for respective first and second axes of said display (120, 322), each of said first set of image subframe data and said second set of image subframe data defining data for a plurality of said subframes, said target matrix substantially a product of at least said first and second factor matrices (R,C), wherein said factorising comprises non-negative matrix factorisation,
wherein, for each of said determining of said first set of image subframe data and said determining of said second set of image subframe data, the determining of the set of image subframe data comprises iteratively determining the first and second factor matrices (RC) of the image subframe data from initial value data of the first and second factor matrices (R,C), the iterative determining comprising for each subframe of the set of image subframe data an iteration determining a said first and second factor matrices (R,C), each said iteration using the determined first and second factor matrices (R,C) of a preceding said iteration such that an error between the target matrix and a result of combining the subframes of the set of image subframe data converges towards zero; and wherein said initial value data comprises initial said first and second factor matrices (R,C) initialised using said image data and is different for said determining of said first and second sets of subframe data.

2. A method as claimed in claim 1 wherein said determining of said first set of image subframe data includes determining residuals data representing an error of a said set of subframes in said approximating said common spatial portion of said image; and wherein said determining of said second set of image subframe data comprises determining a set of image subframes to approximate a combination of said common spatial portion of said image and said residuals data.

3. A method as claimed in claim 2 wherein said displayed image has a target signal-to-noise ratio (SNR), and wherein a number of said first and second subframes is chosen such that each set of subframes, individually, fails to meet said target SNR.

**4.** A method as claimed in any preceding claim further comprising determining, using said image data, a third set of image subframe data for a third plurality of image subframes each representing said common spatial portion of said image, wherein said third plurality of image subframes combine to approximate said common spatial portion of said image; and driving said display (120, 322) using said third set of image subframe data.

**5.** A method of driving a passive matrix electroluminescent display (120, 322) using multi-line addressing with video data using the method of any preceding claim for each displayed video frame wherein an error in displaying one frame is taken into account when determining subframe data for displaying the next video frame.

**6.** A method as claimed in any preceding claim wherein said electroluminescent display (120, 322) comprises an OLED display.

**7.** A carrier carrying processor control code, to when running, implement the method of any preceding claim.

**8.** A driver (150, 110, 112, 304, 312, 314, 318, 320) for driving a passive matrix electroluminescent display (120, 322) to display an image, said driving comprising multi-line addressing, the driver comprising:

an input to receive input data for said image;
means arranged to determine (304), using said image data, a first set of image subframe data for a first plurality of image subframes each representing a common spatial portion of said image, wherein said first plurality of image subframes combine to approximate said common spatial portion of said image;
means arranged to determine (304), using said image data, a second set of image subframe data for a second plurality of image subframes each representing said common spatial portion of said image wherein said second plurality of image subframes combine to approximate said common spatial portion of said image; and
an output for driving said display (120, 322) using said first and second sets of image subframe data,
wherein said image data defines a target image matrix, and wherein each of said determining of a said first set of image subframe data and said determining of a said second set of image subframe data comprises factorising said target matrix to determine first and second factor matrices (R,C) defining data for respective first and second axes of said display (120, 322), each of said first set of image subframe data and said second set of image subframe data defining data for a plurality of said subframes, said target matrix substantially a product of at least said first and second factor matrices (R,C), wherein said factorising comprises non-negative matrix factorisation, and
wherein, for each of said determining of said first set of image subframe data and said determining of said second first set of image subframe data, the determining of the set of image subframe data comprises iteratively determining the first and second factor matrices (R,C) of the image subframe data from initial value data of the first and second factor matrices (R,C), the iterative determining comprising for each subframe of the set of image subframe data an iteration determining a said first and second factor matrices (R,C), each said iteration using the determined first and second factor matrices (R,C) of a preceding said iteration such that an error between the target matrix and a result of combining the subframes of thed set of image subframe data converges towards zero; and
wherein said initial value data comprises initial said first and second factor matrices (R,C) initialised using said image data and is different for said determining of said first and second sets of subframe data.

**Patentansprüche**

**1.** Verfahren zum Ansteuern einer Passiv-Matrix-Elektrolumineszenz-Anzeigeeinrichtung (120, 322) unter Verwendung von Mehrzeilenadressierung, um ein Bild anzuzeigen, wobei das Verfahren umfasst:

Eingeben von Bild-Daten für das Bild;
Bestimmen eines ersten Satzes von Bild-Subframe-Daten für eine erste Vielzahl von Bild-Subframes, die jeweils einen gemeinsamen räumlichen Abschnitt des Bildes repräsentieren, unter Verwendung der Bild-Daten, wobei die erste Vielzahl von Bild-Subframes zusammen eine Näherung des gemeinsamen räumlichen Abschnitts des Bildes schaffen;
Ansteuern der Anzeigeeinrichtung (120, 322) unter Verwendung des ersten Satzes von Bild-Subframe-Daten;
Bestimmen eines zweiten Satzes von Bild-Subframe-Daten für eine zweite Vielzahl von Bild-Subframes, die jeweils den gemeinsamen räumlichen Abschnitt des Bildes repräsentieren, unter Verwendung der Bild-Daten, wobei die zweite Vielzahl von Bild-Subframes zusammen eine Näherung des gemeinsamen räumlichen Abschnitts des Bildes schaffen;
Ansteuern der Anzeigeeinrichtung (120, 322) unter Verwendung des zweiten Satzes von Bild-Subframe-Daten;

wobei die Bild-Daten eine Soll-Bild-Matrix definieren und das Bestimmen des ersten Satzes von Bild-Subframe-Daten sowie das Bestimmen des zweiten Satzes von Bild-Subframe-Daten jeweils umfassen, dass die Soll-Matrix faktorisiert wird, um eine erste und eine zweite Faktor-Matrix (RC) zu bestimmen, die Daten für eine erste bzw. eine zweite Achse der Anzeigeeinrichtung (120, 322) definieren, der erste Satz von Bild-Subframe-Daten sowie der zweite Satz von Bild-Subframe-Daten jeweils Daten für eine Vielzahl der Subframes definieren und die Soll-Matrix im Wesentlichen ein Produkt wenigstens der ersten und der zweiten Faktor-Matrix (R,C) ist und das Faktorisieren nicht negative Matrix-Faktorisierung umfasst,

wobei bei dem Bestimmen des ersten Satzes von Bild-Subframe-Daten sowie dem Bestimmen des zweiten Satzes von Bild-Subframe-Daten das Bestimmen des Satzes von Bild-Subframe-Daten iteratives Bestimmen der ersten und der zweiten Faktor-Matrix (R,C) der Bild-Subframe-Daten von Anfangswert-Daten der ersten und der zweiten Faktor-Matrix (R,C) ausgehend umfasst, das iterative Bestimmen für jeden Subframe des Satzes von Bild-Subframe-Daten eine Iteration umfasst, mit der eine erste und eine zweite Faktor-Matrix (R,C) bestimmt werden, für jede Iteration die bestimmte erste und zweite Faktor-Matrix (R,C) einer vorhergehenden Iteration verwendet werden, so dass eine Abweichung zwischen der Soll-Matrix und einem Ergebnis des Kombinierens der Subframes des Satzes von Bild-Subframe-Daten gegen Null geht; und

die Anfangswert-Daten den Anfang der ersten und der zweiten Faktor-Matrize (R,C), initialisiert unter Verwendung der Bild-Daten, umfassen und sie sich beim Bestimmen des ersten und des zweiten Satzes von Subframe-Daten unterscheiden.

2.  Verfahren nach Anspruch 1, wobei das Bestimmen des ersten Satzes von Bild-Subframe-Daten einschließt, dass Restwert-Daten bestimmt werden, die eine Abweichung eines Satzes von Subframes bei dem Nähern des gemeinsamen räumlichen Abschnitts des Bildes repräsentieren ; und

das Bestimmen des zweiten Satzes von Bild-Subframe-Daten Bestimmen eines Satzes von Bild-Subframes zum Nähern einer Kombination des gemeinsamen räumlichen Abschnitts des Bildes und der Restwert-Daten umfasst.

3.  Verfahren nach Anspruch 2, wobei das angezeigte Bild einen Soll-Signal-Rausch-Abstand (SNR) hat und eine Anzahl der ersten und der zweiten Subframes so gewählt wird, dass jeder Satz von Subframes einzeln den Soll-Signal-Rausch-Abstand nicht erreicht.

4.  Verfahren nach einem der vorangehenden Ansprüche, das des Weiteren umfasst, dass unter Verwendung der Bild-Daten ein dritter Satz von Bild-Subframe-Daten für eine dritte Vielzahl von Bild-Subframes bestimmt wird, die jeweils den gemeinsamen räumlichen Abschnitt des Bildes repräsentieren, und die dritte Vielzahl von Bild-Subframes zusammen eine Näherung des gemeinsamen räumlichen Abschnitts des Bildes erzeugen, und die Anzeigeeinrichtung (120, 322) unter Verwendung des dritten Satzes von Bild-Subframe-Daten angesteuert wird.

5.  Verfahren zum Ansteuern einer Passiv-Matrix-Elektroluminiszenz-Anzeigeeinrichtung (120, 322) unter Verwendung von Mehrzeilenadressierung mit Video-Daten unter Einsatz des Verfahrens nach einem der vorangehenden Ansprüche für jeden angezeigten Video-Frame, wobei eine Abweichung beim Anzeigen eines Frame berücksichtigt wird, wenn Subframe-Daten zum Anzeigen des nächsten Video-Frame bestimmt werden.

6.  Verfahren nach einem der vorangehenden Ansprüche, wobei die Elektroluminiszenz-Anzeigeeinrichtung (120, 322) eine OLED-Anzeigeeinrichtung umfasst.

7.  Träger, der Prozessor-Steuercode überträgt, um beim Ausführen das Verfahren nach einem der vorangehenden Ansprüche zu implementieren.

8.  Ansteuervorrichtung (150, 110, 112, 304, 312, 314, 318, 320) zum Ansteuern einer Passiv-Matrix-Elektroluminiszenz-Anzeigeeinrichtung (120, 322) zum Anzeigen eines Bildes, wobei das Ansteuern Mehrzeilenadressierung umfasst und die Ansteuervorrichtung umfasst:

einen Eingang zum Empfangen von Eingangs-Daten für das Bild;

eine Einrichtung (304), die so eingerichtet ist, dass sie unter Verwendung der Bild-Daten einen ersten Satz von Bild-Subframe-Daten für eine erste Vielzahl von Bild-Subframes bestimmt, die jeweils einen gemeinsamen räumlichen Abschnitt des Bildes repräsentieren, wobei die erste Vielzahl von Bild-Subframes zusammen eine Näherung des gemeinsamen räumlichen Abschnitts des Bildes schaffen;

eine Einrichtung (304), die so eingerichtet ist, dass sie unter Verwendung der Bild-Daten einen zweiten Satz von Bild-Subframe-Daten für eine zweite Vielzahl von Bild-Subframes bestimmt, die jeweils den gemeinsamen räumlichen Abschnitt des Bildes repräsentieren, wobei die zweite Vielzahl von Bild-Subframes zusammen eine Näherung des gemeinsamen räumlichen Abschnitts des Bildes schaffen; und einen Ausgang zum Ansteuern der Anzeigeeinrichtung (120, 322) unter Verwendung des ersten und des zweiten Satzes von Bild-Subframe-Daten,

wobei die Bild-Daten eine Soll-Bild-Matrix definieren und das Bestimmen des ersten Satzes von Bild-Subframe-Daten sowie das Bestimmen des zweiten Satzes von Bild-Subframe-Daten jeweils umfassen, dass die Soll-Matrix faktorisiert wird, um eine erste und eine zweite Faktor-Matrix (RC) zu bestimmen, die Daten für eine erste bzw. eine zweite Achse der Anzeigeeinrichtung (120, 322) definieren, der erste Satz von Bild-Subframe-Daten sowie der zweite Satz von Bild-Subframe-Daten jeweils Daten für eine Vielzahl der Subframes definieren und die Soll-Matrix im Wesentlichen ein Produkt wenigstens der ersten und der zweiten Faktor-Matrix (R,C) ist und das Faktorisieren nicht negative Matrix-Faktorisierung umfasst, und

wobei bei dem Bestimmen des ersten Satzes von Bild-Subframe-Daten sowie dem Bestimmen des zweiten Satzes von Bild-Subframe-Daten das Bestimmen des Satzes von Bild-Subframe-Daten iteratives Bestimmen der ersten und der zweiten Faktor-Matrix (R,C) der Bild-Subframe-Daten von Anfangswert-Daten der ersten und der zweiten Faktor-Matrix (R,C) ausgehend umfasst, das iterative Bestimmen für jeden Subframe des Satzes von Bild-Subframe-Daten eine Iteration umfasst, mit der eine erste und eine zweite Faktor-Matrix (R,C) bestimmt werden, für jede Iteration die bestimmte erste und zweite Faktor-Matrix (R,C) einer vorhergehenden Iteration verwendet werden, so dass eine Abweichung zwischen der Soll-Matrix und einem Ergebnis des Kombinierens der Subframes des Satzes von Bild-Subframe-Daten gegen Null geht; und

die Anfangswert-Daten den Anfang der ersten und der zweiten Faktor-Matrize (R,C), initialisiert unter Verwendung der Bild-Daten, umfassen und sie sich beim Bestimmen des ersten und des zweiten Satzes von Subframe-Daten unterscheiden.

**Revendications**

**1.** Procédé de commande d'un dispositif électroluminescent à matrice passive (120, 322) utilisant un adressage sur plusieurs lignes pour afficher une image, le procédé comprenant :

l'entrée de données d'image pour ladite image ; la détermination, en utilisant lesdites données d'image, d'un premier ensemble de données de sous-trame d'image pour une première pluralité de sous-trames d'image représentant chacune une partie spatiale commune de ladite image, dans lequel les sous-trames d'image de ladite pluralité de sous-trames d'image se combinent pour effectuer une approximation de ladite partie spatiale commune de ladite image ; la commande dudit dispositif d'affichage (120, 322) utilisant ledit premier ensemble de données de sous-trame d'image ; la détermination, utilisant lesdites données d'image, d'un deuxième ensemble de données de sous-trame d'image pour une deuxième pluralité de sous-trames d'image représentant chacune ladite partie spatiale commune de ladite image, dans lequel les sous-trames d'image de ladite deuxième pluralité de sous-trames d'image se combinent pour effectuer une approximation de ladite partie spatiale commune de ladite image ; et la commande dudit dispositif d'affichage (120, 322) utilisant ledit deuxième ensemble de données de sous-trame d'image, dans lequel lesdites données d'image définissent une matrice d'image cible, et dans lequel chaque détermination de ladite détermination dudit premier ensemble de données de sous-trame d'image et de ladite détermination dudit deuxième ensemble de données de sous-trame d'image comprend la factorisation de ladite matrice cible pour déterminer des première et deuxième matrices de facteurs (RC) définissant des données pour des premier et deuxième axes respectifs dudit dispositif d'affichage (120, 322) chaque ensemble dudit premier ensemble de données de sous-trame d'image et dudit deuxième ensemble de données de sous-trame d'image définissant des données pour une pluralité desdites sous-trames, ladite matrice cible étant sensiblement le produit d'au moins lesdites première et deuxième matrices de facteurs (R, C), dans lequel ladite factorisation comprend une factorisation de matrice non négative, dans lequel pour chaque détermination de ladite détermination dudit premier sous-ensemble de données de sous-trame d'image et de ladite détermination dudit deuxième ensemble de données de sous-trame d'image, la détermination de l'ensemble de données de sous-trame d'image comprend la détermination itérative des première et deuxième matrices de facteurs (RC) des données de sous-trames d'image d'après les données de valeur initiale des première et deuxième matrices de facteurs (R, C), la détermination itérative comprenant, pour chaque sous-trame de l'ensemble de données de sous-trame d'image, une itération déterminant une dite première et une dite deuxième matrice factorielle (R, C), chaque dite itération utilisant les première et deuxième matrices de facteurs déterminées (R, C) d'une dite itération précédente de sorte qu'une erreur entre la matrice cible et le résultat de la combinaison des sous-trames de l'ensemble de données de sous-trame d'image converge vers zéro ; et

dans lequel lesdites données de valeur initiale comprennent lesdites première et deuxième matrices de facteurs initiales (R, C) initialisées en utilisant lesdites données d'image et sont différentes pour ladite détermination desdits premiers et deuxième ensemble de données de sous-trame.

2. Procédé selon la revendication 1, dans lequel ladite détermination dudit premier ensemble de données de sous-trame d'image comporte la détermination de données résiduelles représentant l'erreur d'un dit ensemble de sous-trames dans ladite approximation de ladite partie spatiale commune de ladite image ; et

dans lequel ladite détermination dudit deuxième ensemble de données de sous-trame d'image comprend la détermination d'un ensemble de sous-trames d'image pour effectuer une approximation d'une combinaison de ladite partie spatiale commune de ladite image et desdites données résiduelles.

3. Procédé selon la revendication 2, dans lequel ladite image affichée possède un rapport signal sur bruit cible (SNR), et dans lequel le nombre desdites première et deuxième sous-trames est choisi de sorte que chaque ensemble de sous-trames, ne parvient pas individuellement à atteindre ledit SNR cible.

4. Procédé selon l'une quelconque des revendications précédentes, comprenant en outre la détermination, utilisant lesdites données d'image, d'un troisième ensemble de données de sous-trame d'image pour une troisième pluralité de sous-trames d'image représentant chacune ladite partie spatiale commune de ladite image, dans lequel les sous-trames d'image de ladite troisième pluralité de sous-trames d'image se combinent pour effectuer une approximation de ladite partie spatiale commune de ladite image ; et la commande dudit dispositif d'affichage (120, 322) utilisant ledit troisième ensemble de données de sous-trame d'image.

5. Procédé de commande d'un dispositif d'affichage électroluminescent à matrice passive (120, 322) utilisant un adressage sur plusieurs lignes avec des données vidéo utilisant le procédé selon l'une quelconque des revendications précédentes pour chaque trame vidéo affichée dans lequel on tient compte d'une erreur d'affichage d'une trame lors de la détermination des données de sous-trame pour afficher la trame vidéo suivante.

6. Procédé selon l'une quelconque des revendications précédentes, dans lequel ledit dispositif d'affichage électroluminescent (120, 322) est constitué d'un dispositif d'affichage OLED.

7. Code de commande de processeur portant un support pour, lors d'une exécution, mettre en oeuvre le procédé selon l'une quelconque des revendications précédentes.

8. Dispositif de commande (150, 110, 112, 304, 312, 314, 318, 320) pour commander un dispositif électroluminescent à matrice passive (120, 322) pour afficher une image, ladite commande comprenant un adressage sur plusieurs lignes, le dispositif de commande comprenant :

une entrée pour recevoir des données d'entrée pour ladite image ;
un moyen agencé pour déterminer (304), en utilisant lesdites données d'image, un premier ensemble de données de sous-trame d'image pour une première pluralité de sous-trames d'image représentant chacune une partie spatiale commune de ladite image, dans lequel les sous-trames d'image de ladite première pluralité de sous-trames d'image se combinent pour effectuer une approximation de ladite partie spatiale commune de ladite image ;
un moyen agencé pour déterminer (304) en utilisant lesdites données d'image, un deuxième ensemble de données de sous-trame d'image pour une deuxième pluralité de sous-trames d'image représentant chacune ladite partie spatiale commune de ladite image, dans lequel les sous-trames d'image de ladite deuxième pluralité de sous-trames d'image se combinent pour effectuer une approximation de ladite partie spatiale commune de ladite image ; et
une sortie pour commander ledit dispositif d'affichage (120, 322) utilisant lesdits premier et deuxième ensembles de données de sous-trame d'image,
dans lequel lesdites données d'image définissent une matrice d'image cible, et dans lequel chaque détermination de ladite détermination dudit premier ensemble de données de sous-trame d'image et de ladite détermination d'un dit deuxième ensemble de données de sous-trame d'image comprend la factorisation de ladite matrice cible pour déterminer des première et deuxième matrices de facteurs (RC) définissant des données pour des premier et deuxième axes respectifs dudit dispositif d'affichage (120, 322) chaque ensemble dudit premier ensemble de données de sous-trame d'image et dudit deuxième ensemble de données de sous-trame d'image définissant des données pour une pluralité desdites sous-trame, ladite matrice cible étant sensiblement le produit d'au moins lesdites première et deuxième matrices de facteurs (R, C), dans lequel ladite factorisation comprend une factorisation de matrice non négative, et dans lequel pour chaque détermination de ladite détermination dudit premier sous-ensemble de données de sous-trame d'image et de ladite détermination dudit deuxième ensemble de données de sous-trame d'image, la détermination de l'ensemble de données de sous-trame d'image comprend la détermination itérative des première et deuxième matrices de facteurs (RC) des données de sous-trames d'image d'après les données de valeur initiale des première et deuxième matrices de facteurs (R, C), la détermination itérative comprenant, pour chaque sous-trame de l'ensemble de données de sous-trame d'image, une itération déterminant une dite première et une dite deuxième matrice factorielle (R, C), chaque dite itération utilisant les première et deuxième matrices de facteurs déterminées (R, C) d'une dite itération précédente de sorte qu'une erreur entre la matrice cible et le résultat de la combinaison des sous-trames de l'ensemble de données de sous-trame d'image converge vers zéro ; et

dans lequel lesdites données de valeur initiale comprennent lesdites première et deuxième matrices de facteurs initiales (R, C) initialisées en utilisant lesdites données d'image et sont différentes pour ladite détermination desdits premier et deuxième ensemble de données de sous-trame.

F

G      A     X

**Figure 1a**

F

G      A     X

**Figure 1b**

PIXEL
BRIGHTNESS

t

ONE FRAME PERIOD

**Figure 1c**

PIXEL
BRIGHTNESS

t

ONE FRAME PERIOD

**Figure 1d**

Figure 1e

Figure 1f

Figure 2a

COLUMN
DRIVERS

Iref CONTROL

C( $p_i$ )
(PWM)

1    2    3    4    m

TO COLUMN ELECTRODES

110

REFERENCE
ROW SELECTOR

TO ROW
ELECTRODES

REF IN          OUT OUT OUT OUT

PROGRAMMABLE CURRENT MIRROR

RATIO CONTROL

R( $p_i$ )

112

Figure 2b

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2005050219 W
- US 20030214493 A
- US 20040257359 A
- EP 0953956 A
- GB 2327798 A
- WO 2004088568 A

- WO 2004001707 A, Trags Alexander JR
- US 4539507 A
- GB 20050501679 A
- GB 2005010168 W
- GB 0605755 A
- GB 0605748 A